# EUROPEAN PATENT SPECIFICATION

(11) **EP 2 893 112 B1**
(45) Date of publication and mention of the grant of the patent: **29.04.2020**
(21) Application number: 13763400.2
(22) Date of filing: 05.09.2013
(51) Int. Cl.: E06B 3/58, E06B 3/62, E06B 3/66

(54) **SPACER SYSTEM FOR INSTALLING VACUUM INSULATED GLASS (VIG) WINDOW UNIT IN WINDOW FRAME DESIGNED TO ACCOMMODATE THICKER IG WINDOW UNIT**
ABSTANDSHALTERSYSTEM ZUR INSTALLATION EINER FENSTEREINHEIT AUS VAKUUMISOLIERTEM GLAS (VIG) IN EINEM ZUR EINPASSUNG EINER STÄRKEREN IG-FENSTEREINHEIT VORGESEHENEN FENSTERRAHMEN
SYSTÈME D'ESPACEUR POUR INSTALLATION DE BLOC FENÊTRE À VITRAGE ISOLANT SOUS VIDE (VIG) DANS UN DORMANT DE FENÊTRE CONÇU POUR RECEVOIR UN BLOC FENÊTRE À VITRAGE ISOLANT/VITRAGE INTÉGRÉ (IG) PLUS ÉPAIS

(30) Priority: 07.09.2012 US 201213606096
(43) Date of publication of application: 15.07.2015
(73) Proprietor: Guardian Glass, LLC, Auburn Hills MI 48326 (US)
(72) Inventor: JONES, Jeffrey, A., Ann Arbor, MI 48101 (US)
(74) Representative: Hoyng Rokh Monegier LLP
(86) International application number: PCT/US2013/058211
(87) International publication number: WO 2014/039642

(56) References cited:
- EP-A1- 0 244 494
- EP-A1- 0 566 070
- DE-A1- 2 245 303
- DE-A1- 4 241 309
- DE-U1- 9 016 708
- US-B1- 6 478 911

## Description

### Technical Field

The disclosure relates generally to vacuum insulated glass (VIG) window unit installation configurations and methods for installing a VIG window unit in a window frame that was designed to accommodate at least a thicker IG (insulating glass/integrated glass) window unit(s). Certain embodiments relate to a peripheral spacer system for use in installing a VIG window unit in a window frame that was designed to accommodate at least a thicker IG window unit, the spacer system being provided around the periphery of the VIG unit adjacent the frame. Such techniques, including the spacer system, can be used for example in either new construction with new window frames, or to replace existing IG windows in old window frames that previously housed IG units.

### BACKGROUND AND SUMMARY OF EXAMPLE EMODIMENTS

Vacuum insulating glass (VIG) units typically include two spaced apart glass substrates with an evacuated or low-pressure gap/space/cavity therebetween. The substrates are interconnected by a peripheral edge seal and typically include an array of spacers/pillars between the glass substrates to maintain spacing between the glass substrates and to avoid collapse of the glass substrates that may be caused due to the low pressure environment that exists between the substrates. Some example VIG configurations are disclosed, for example, in U.S. Patent Nos. 5,657,607, 5,664,395, 5,657,607, 5,902,652, 6,701,749 and 6,383,580.

Document EP 0 566 070 A1 discloses window units according to the preamble of claims 1 and 9.

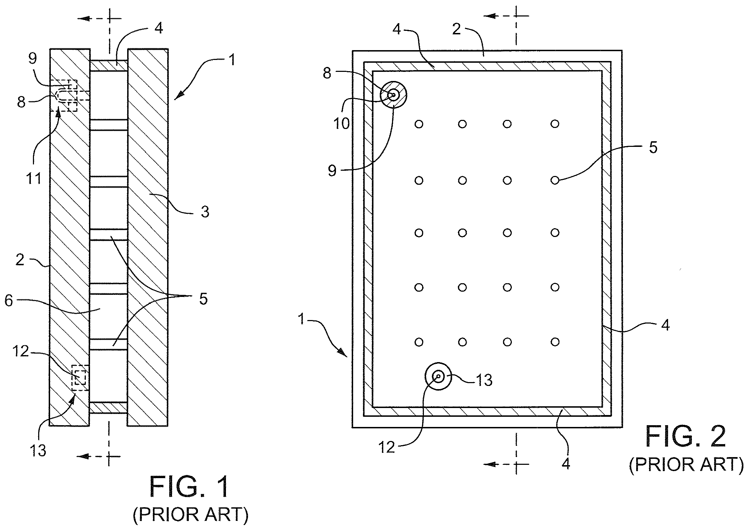

FIGS. 1 and 2 illustrate a typical VIG window unit 1 and elements that form the VIG window unit 1. For example, VIG unit 1 may include two spaced apart substantially parallel glass substrates 2, 3, which enclose an evacuated low-pressure space/cavity 6 therebetween. Glass sheets or substrates 2,3 are interconnected by a peripheral edge seal 4 which may be made of fused solder glass or the like, for example. An array of support pillars/spacers 5 may be included between the glass substrates 2, 3 to maintain the spacing of substrates 2, 3 of the VIG unit 1 in view of the low-pressure space/gap 6 present between the substrates 2, 3.

A pump-out tube 8 may be hermetically sealed by, for example, solder glass 9 or the like to an aperture/hole 10 that passes from an interior surface of one of the glass substrates 2 to the bottom of an optional recess 11 in the exterior surface of the glass substrate 2, or optionally to the exterior surface of the glass substrate 2. A vacuum is attached to and/or communicates with pump-out tube 8 to evacuate the interior cavity 6 to a low pressure that is less than atmospheric pressure, for example, using a sequential pump down operation. After evacuation of the cavity 6, a portion (e.g., the tip) of the tube 8 is melted to seal the vacuum in low pressure cavity/space 6. The optional recess 11 may retain the sealed pump-out tube 8. Optionally, a chemical getter 12 may be included within a recess 13 that is disposed in an interior face of one of the glass substrates, e.g., glass substrate 2. The chemical getter 12 may be used to absorb or bind with certain residual impurities that may remain after the cavity 6 is evacuated and sealed.

VIG units with fused solder glass peripheral edge seals 4 are typically manufactured by depositing glass frit or other suitable material, in a solution (e.g., frit paste), around the periphery of substrate 2 (or on substrate 3). This glass frit paste ultimately forms the edge seal 4. The other substrate (e.g., 3) is brought down on substrate 2 so as to sandwich spacers/pillars 5 and the glass frit solution between the two substrates 2, 3. The entire assembly including the glass substrates 2, 3, the spacers/pillars 5 and the seal material (e.g., glass frit in solution or paste), is then heated to a high temperature (e.g., of at least about 500°C), at which point the glass frit melts, wets the surfaces of the glass substrates 2, 3, and ultimately forms a hermetic peripheral/edge seal 4.

After formation of the edge seal 4 between the substrates, a vacuum is drawn via the pump-out tube 8 to form low pressure space/cavity 6 between the substrates 2, 3. The pressure in space 6 may be produced by way of an evacuation process to a level below atmospheric pressure, e.g., below about 10⁻² Torr. To maintain the low pressure in the space/cavity 6, substrates 2, 3 are hermetically sealed via the edge seal 4 and sealing off of the pump-out tube. Small high strength spacers/pillars 5 are provided between the transparent glass substrates to maintain separation of the approximately parallel glass substrates against atmospheric pressure. As noted above, once the space 6 between substrates 2, 3 is evacuated, the pump-out tube 8 may be sealed, for example, by melting its tip using a laser or the like.

Dual pane VIG window units are generally much more efficient insulators than typical dual pane non-vacuum IG window units. VIG window units, while having better performance, are also significantly thinner than non-vacuum IG window units. Because of the difference in thickness, a typical window installation structure, e.g., a window frame (e.g., sash), may need to be redesigned to effectively utilize and accept a VIG window unit if it was originally designed for a thicker IG unit. This may result in replacement of the window frame (e.g., which may include a sash) in order to accommodate a thinner VIG unit. Redesigning window structures and replacing and/or redesigning window frames (e.g., sashes) is costly and time consuming and may contribute to slow adoption of VIG window units, especially in existing buildings or by smaller manufacturers, in spite of the many benefits and advantages associated with VIG window units.

It will be appreciated that standard IG window units are rather thick, and come in various thicknesses (e.g., from about 19-40 mm thick). As mentioned above, window frames are typically designed to accept these thick IG window units, e.g., for use in office building, home residences, apartment buildings, etc. On the other hand, VIG window units are significantly thinner (e.g., from about 4-12 mm thick, more preferably from about 4-10 mm thick, more preferably from about 7-9 mm thick, with an example thickness being about 8.3 mm) than typical IG window units. And thermal performance of VIG units is dramatically better than that of IG window units (e.g., VIG units have higher R-values than do IG units).

It would be desirable to use VIG units in window frames that were designed to accommodate IG units. This would allow one to avoid, or reduce, the need for redesigns of window frames and/or changes to window frames.

A peripheral spacer system for use in installing a VIG window unit in a window frame (which may include a sash) is shown, that was designed to accommodate at least a thicker IG window unit, the spacer system being provided around the periphery of the VIG unit so as to be located adjacent the frame and/or located between the frame and the glass substrates of the VIG unit. The spacer system may fit around the glass substrates of the VIG unit, preferably on all four sides of the window in one or more pieces. Thus, with respect to the spacer system, structures and/or techniques are provided for installing thinner VIG window units in window frames that were/are designed for thicker IG window units, thereby possibly avoiding or reducing the need to redesign or significantly change window frames. Such techniques can be used in either new construction with new window frames, or to replace existing IG windows in old window frames that previously housed IG units, or to repair existing IG or VIG windows units by replacing the existing IG or VIG window with a VIG window unit. Thus, it will be appreciated that this disclosure is not limited to replacing IG windows with VIG windows in existing frames, e.g., it is also relates to structure(s) designed for new VIG window units.

Certain example embodiments of this invention are advantageous with respect to one or more of: (i) encouraging adoption of high-efficiency high-performance VIG window units including their improved thermal performance, (ii) reducing the amount of time for adoption of VIG window units by window manufacturers and/or enabling rapid adoption and/or deployment of VIG, (iii) providing the ability to implement VIG window units in window designs that were/are designed for thicker IG units with little or no modification of the frame (e.g., including sash) structure, (iv) providing the ability for low-volume window manufacturers to adopt VIG window units, (v) reducing tooling required for window manufacturers, (vi) maintaining the appearance of the window features and/or aesthetics, and/or (vii) providing a spacer system to be located around the VIG glass substrates so that it can fit into a frame designed for thicker IG units, wherein the spacer system (a) provides improved thermal insulation, (b) helps protect the unit during shipping from manufacturing facilities to window factories and/or job sites, (c) provides added strength/integrity to the VIG unit; and/or (d) improves thermal performance of VIG units at edge(s) thereof.

According to claim 1 of this invention, there is provided a window unit comprising: a VIG window unit in a window frame, the window frame capable of supporting a non-vacuum IG window unit having a larger thickness than does the VIG window unit, said VIG window unit comprising first and second glass substrates with a low pressure gap provided therebetween, the low pressure gap being at pressure less than atmospheric pressure; the VIG window unit being directly supported on a first major side by a first stop portion of said frame and being indirectly supported on a second major side by a second stop portion of said frame, so that a spacer is provided on the second major side of the VIG window unit between the VIG window unit and the second stop portion, but no similar spacer is provided on the first major side of the VIG window unit.

According to claim 9 of this invention, there is provided a window unit comprising: a VIG window unit in a window frame, the window frame capable of supporting a non-vacuum IG window unit having a larger thickness than does the VIG window unit, said VIG window unit comprising first and second glass substrates with a low pressure gap provided therebetween, the low pressure gap being at pressure less than atmospheric pressure; the VIG window unit being located between a first stop portion of said frame and a second stop portion of said frame, and wherein a first spacer is provided between the VIG window unit and the first stop portion, and a second spacer is provided between the VIG window unit and the second stop portion.

There is further provided a method of installing a vacuum insulated glass (VIG) window unit in a window frame according to claim 15, the method comprising: removing an IG window unit from the window frame, the IG window unit having a thickness of from about 19-40 mmn; seating a VIG window unit, having a thickness of from about 4-12 mm, in the window frame, the VIG window unit comprising first and second glass substrates with a low pressure gap provided therebetween, the low pressure gap being at pressure less than atmospheric pressure, wherein the VIG window unit is located between a first stop portion of the frame and a second stop portion of the frame; and wherein a spacer structure is provided between the VIG window unit and at least one of the first and second stop portions of the window frame.

These and other embodiments and advantages are described herein with respect to certain example embodiments and with reference to the following drawings in which like reference numerals refer to like elements, and wherein:

### BRIEF DESCRIPTION OF THE DRAWINGS

FIG. 1 is a cross sectional schematic diagram of a conventional VIG unit;
FIG. 2 is a top plan view of the conventional VIG unit of FIG. 1;
FIG. 3 is a schematic partial cross sectional diagram illustrating an example window frame designed for a standard IG window unit, with an IG window unit being located in the frame;
FIG. 4 is a schematic partial cross sectional diagram illustrating a spacer system for a VIG unit according to an example embodiment of this invention, the spacer system for allowing a VIG window unit to be installed in a window frame designed to accommodate at least a thicker IG window unit;
FIG. 5 is a schematic partial cross sectional diagram illustrating an enlarged portion of a corner of part of the spacer structure of FIG. 4;
FIG. 6 is a schematic partial cross sectional diagram illustrating a spacer system for a VIG unit according to another example embodiment of this invention, the spacer system for allowing a VIG window unit to be installed in a window frame designed to accommodate at least a thicker IG window unit;
FIG. 7 is a schematic partial cross sectional diagram illustrating a spacer system for a VIG unit according to another example embodiment of this invention, the spacer system for allowing a VIG window unit to be installed in a window frame designed to accommodate at least a thicker IG window unit; and
FIG. 8 is a schematic partial cross sectional diagram illustrating an enlarged portion of a corner of part of the spacer structure of FIG. 7.

### DETAILED DESCRIPTION OF EXAMPLE EMBODIMENTS

Certain example embodiments will be described in detail herein with reference to the foregoing drawings in which like reference numerals refer to like elements throughout the several views. It will be understood that the embodiments described herein are intended to be illustrative, not limiting, and that those skilled in the art will understand that various modifications may be made without departing from the scope of the claims appended hereto.

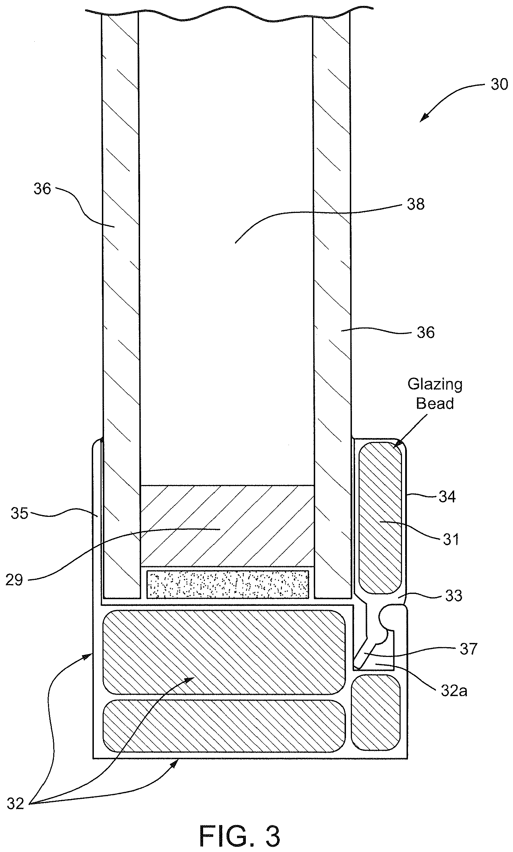

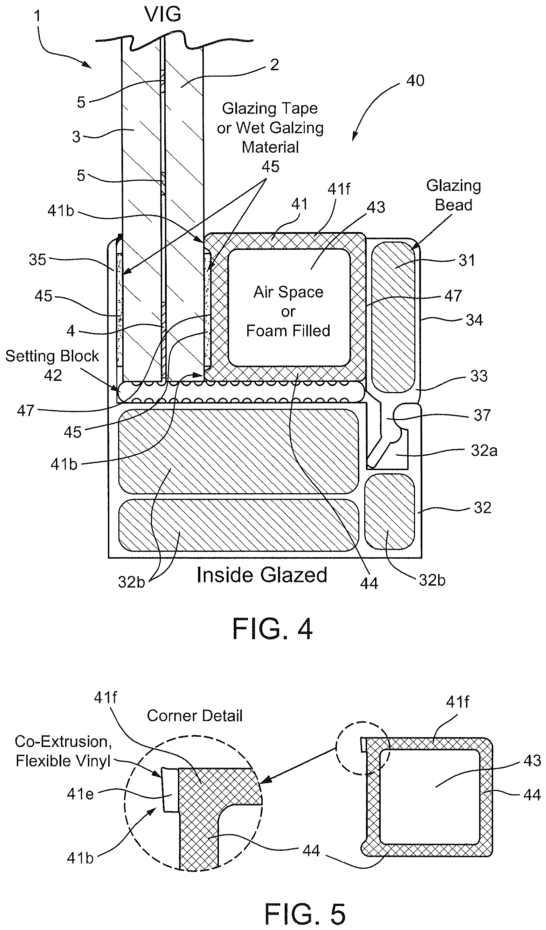

With reference to FIG. 3, a schematic partial cross sectional diagram illustrating a window frame (e.g., including a sash profile) designed for accommodating at least a standard and/or thick IG window unit 30. VIG units, and spacer systems therefore, according to example embodiments of this invention are adapted to be located in the window frame shown in Fig. 3 and/or in any other suitable window frame that is/was designed to accommodate at least IG window units. Thus, according to the invention, the spacer system(s) and VIG unit(s) 1 shown in Figs. 4, 6 and 7 fit into and are housed in the window frame shown in Fig. 3, or in any other suitable window frame designed to accommodate IG window units. Of course, referring to Fig. 3, IG unit 30 is not present when the VIG unit 1 and spacer system therefore are mounted in the frame.

Fig. 3 illustrates IG unit 30, which may, for example and without limitation, include two panes of glass 36 defining an air or gas-filled gap 38 therebetween. The IG window unit 30 is shown seated in/on a window sash 32. The gap 38 between the glass substrates 36 is typically air and/or gas filled, and is at approximately atmospheric pressure (unlike a VIG window unit), and the interior space/gap 38 is sealed via peripheral spacer system 29. The window sash 32 may include a first stop portion 35 that is part of and integral with the main sash portion 32, a second possibly removable stop 34 that may include a clip or other extending portion 37 for connecting the second stop 34 to the sash portion 32 via a recess 32a defined in the sash portion. Stops 34 and 35 may or may not be integral with main sash portion 32 which is provided under and/or adjacent the outer edge of the window unit. Stops 34 and 35 may be substantially parallel to each other, e.g., as shown in Fig. 3, in certain example embodiments. The shapes of stops 34 and 35 in Fig. 3 are for purposes of example only, so that other shaped stops may instead be provided. For example, one or both stops 34, 35 may or may not have a hollow portion (e.g., filled with air or something else) 31 surrounded by a solid portion 33. In other example embodiments, one or both stops 34, 35 may be a solid piece (e.g., of plastic, wood or metal) including or consisting essentially of a substantially planar or planar portion that projects in a direction parallel to the glass substrates of the window unit. The window unit is held and/or positioned, directly or indirectly, between the stops 34, 35.

Still referring to Fig. 3, the IG unit 30 is supported by the sash portion 32, and held in place by stops 34, 35 on either side thereof. A distance between the stops 34 and 35 preferably corresponds to the thickness of the IG unit 30. IG window units 30 are rather thick, and come in various thicknesses (e.g., from about 19-40 mm thick and possibly thicker if three glass substrates are used instead of the two illustrated in Fig. 3). When the IG unit 30 is seated in/on the sash portion 32 and is engaged with the first stop portion 35, the second stop 34 is connected to the sash 32, for example, via the clip or extended portion 37. The stops 34, 35 provide lateral support to the IG window unit 30. The sash 32 and stop portions 34, 35 may be made of any suitable material, including, for example, and without limitation, PVC, fiberglass, wood, rubber, aluminum, various composites, or the like. As noted above, the width of a typical IG unit 30 is in a range of about 20 mm or greater depending on the type of IG window unit. Accordingly, the gap between the stops 34 and 35 of the frame may typically be in a similar range such as at least 19 mm, more preferably from 19-40 mm, and most preferably from 20-35 mm or 20-30 mm.

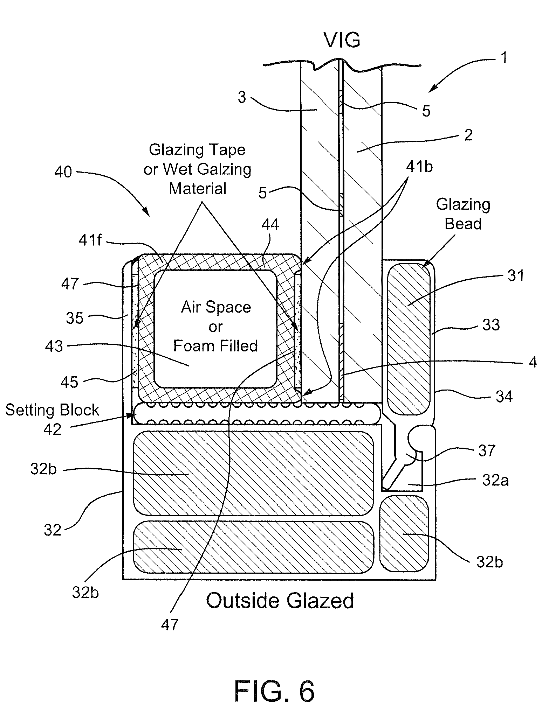

Figs. 4 and 6 are schematic partial cross sectional diagrams illustrating a spacer system/structure 40 for use in connection with a VIG window unit 1 according to an example embodiment of this invention, the spacer system/structure 40 for allowing the VIG window unit 1 to be installed in a window frame (e.g., in the window frame of Fig. 3, which frame does not include the IG window unit 30) designed to accommodate at least a thicker IG window unit 30 as shown in Figs. 4 and 6. In the Fig. 4 embodiment, the spacer structure 40 is located on the side of the VIG unit 1 closest to the exterior of the overall window structure, whereas in the Fig. 6 embodiment the spacer structure 40 is located on the side of the VIG unit 1 farthest from the exterior of the overall window structure. Thus, the embodiments of Figs. 4 and 6 are similar, except that the spacer structure 40 is provided on different sides of the VIG window unit 1.

Still referring to Figs. 4 and 6, the spacer structure 40 includes a hollow spacer block 41 that is located between the VIG unit 1 and one of the stop portions (34 or 35). Spacer portion 41 may be substantially square, rectangular, and/or block shaped as shown in Figs. 4 and 6, or may be otherwise shaped. Spacer block 41 may be made of plastic (e.g., PVC) or any other suitable material, and may include at least one hollow area 43 which is surrounded by a solid portion 44 as viewed cross sectionally as in Figs. 4 and 6, to improve thermal resistance of the resulting window unit structure. In certain example embodiments, spacer portion 41 of the spacer structure may be made of extruded vinyl (e.g., single extruded vinyl strips). Hollow area(s) 43 may be air passages/channels in certain example instances, which may or may not be open at ends thereof. In certain preferred embodiments, while the hollow areas 43 are surrounded by solid portions 44 when viewed cross sectionally, the hollow areas 43 are open at ends thereof (i.e., the hollow areas 43 are open at each of the four corners of the window unit, and are at atmospheric pressure). The spacer structure 40 is preferably provided around all four sides of the window unit, and may be provided in four corresponding strips (one strip for each side of the window) which strips are each mitered at about a forty-five degree angle at each end. Thus, the mitered ends of respective strips of the spacer structure 40 are mated to each other at respective corners of the window unit. Adhesive strips (e.g., glazing tape, VHB strips, and/or wet glazing material) 45 are provided on the exterior sides of the glass substrates 2, 3 of the VIG unit 1 for attaching the spacer structure 40 to the VIG unit 1 and may be provided for attaching the other side of the VIG unit 1 to a stop (34 or 35). According to the invention, the adhesive 45 for attaching the VIG window unit 1 to the spacer portion 41 is provided in a recess defined in a wall(s) of the spacer portion 41 as shown in Figs. 4 and 6. In certain example embodiments, such adhesive 45 may be provided on both sides of the spacer portion 41 as shown in Fig. 6, for attaching the spacer portion 41 to the VIG unit 1 and a stop (34 or 35).

Still referring to Figs. 4 and 6, the spacer portion 41 fits in a gap defined between a stop (34 or 35) and the VIG unit 1. For example, Fig. 4 shows the spacer block 41 mounted between the removable stop 34 and the VIG window unit 1. Alternatively, Fig. 6 shows the spacer block 41 mounted between the integral stop 35 and the VIG window unit 1. In certain example embodiments, the VIG window unit 1 and the spacer portion 41 are both mounted on a setting member such as setting block 42. Setting block 42 is located over the main sash portion 32 and between the main sash portion 32 and the VIG unit 1, as well as between the main sash portion 32 and the spacer portion 41 as shown in Figs. 4 and 6. In certain example embodiments, the main sash portion 32 may include hollow area(s) 32b that may or may not be filled with air, foam or other insulating material, with the hollow area(s) 32b being surrounded by solid portions as shown in Figs. 4 and 6.

According to the invention, the spacer portion 41 includes two corners 41b that face and are in contact with one of the glass substrates of the VIG window unit 1. Adhesive 45 is located between these corners 41b. In certain example embodiments, one or both of the corners 41b of the spacer portion 41 may include a softer material 41e and a harder material 41f, with the softer material 41 e of the corner portion 41b for contacting the VIG window unit 1 (e.g., see Figs. 4-6). The spacer portion 41 may be coextruded with the two different materials 41e and 41f, so that the softer polymer based material 41e is attached to the harder polymer based material 41f in the extrusion process. The use of the softer material 41 e of the spacer structure to contact the VIG window unit provides for an improved seal against the glass of the VIG unit 1, e.g., when the spacer structure is to be utilized on the outside of the overall window structure.

Referring to Figs. 4-6 for example, the VIG window unit 1 and the spacer structure 40 are provided in a window frame, such as the window frame shown in Fig. 3, instead of IG window unit 30. In this respect, Figs. 4 and 6 illustrate the VIG window unit 1 and spacer structure 40 mounted in the window frame of Fig. 3 which was designed for a standard IG window unit. Thus, the spacer structure 40 and VIG window unit 1 may be used to replace an IG window unit 30 in the frame of Fig. 3, or alternatively the structure shown in Figs. 4-6 may be originally provided in a window frame such as the example frame shown in Fig. 3 instead of an IG window unit 30. In particular, the VIG window unit 1 and the spacer structure 40, is provided in the window frame of Fig. 3 on the sash portion 32 and between the stops 34 and 35. The IG window unit 30 shown in Fig. 3 is replaced with the VIG window unit 1 and spacer structure 40 shown in Figs. 4-6, with the exterior sidewalls 47 of the spacer portion 41 contacting or being adhered to the VIG unit 1 and a stop (34 or 35) respectively. Because the VIG window unit 1 is much thinner than the IG window unit 30, the thickness of the spacer structure allows the VIG window unit 1 to be installed in a window frame (e.g., the frame of Fig. 3) that was designed to accommodate at least a thicker IG window unit(s) 30.

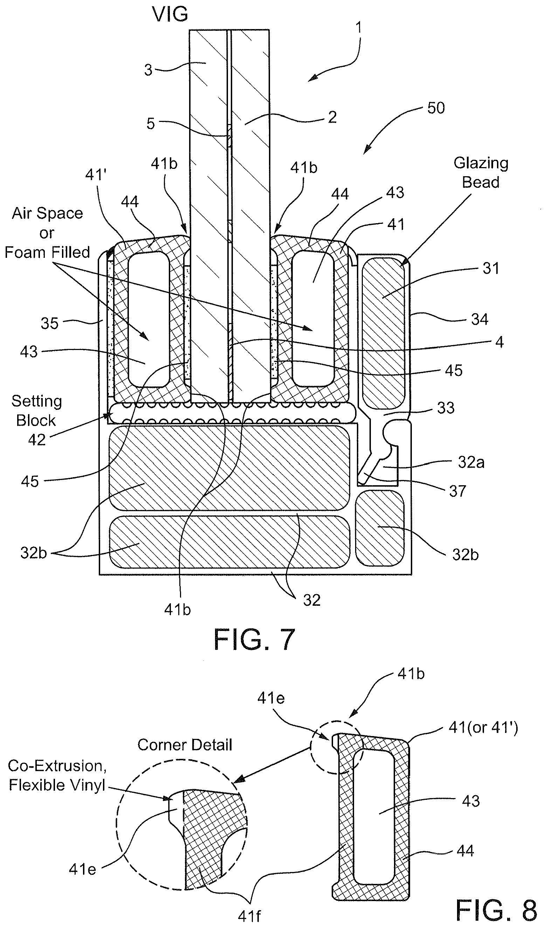

Figs. 7-8 are schematic partial cross sectional diagrams illustrating a spacer system/structure 50 for use in connection with a VIG window unit 1 according to claim 9 of this invention. The spacer system/structure 50 is for allowing the VIG window unit 1 to be installed in a window frame (e.g., the window frame of Fig. 3, which frame does not include the IG window unit 30) designed to accommodate at least a thicker IG window unit 30 (the same way that the VIG unit and spacer structure of Fig. 4-6 are mounted in the Fig. 3 window frame). The spacer structure 50 includes first and second portions 41 and 41' that are attached to opposite sides of the VIG window unit 1. Portions 41 and 41' may or may not extend below the VIG unit 1 in different embodiments (they do not in Fig. 7). Portions 41 and 41' may be made of plastic (e.g., PVC) or any other suitable polymer based material, and each may include at least one hollow area 43 surrounded by a solid portion 44 as viewed cross sectionally as in Fig. 7, to improve thermal resistance of the window unit. In certain preferred embodiments, while the hollow areas 43 are surrounded by solid portions 44 when viewed cross sectionally, the hollow areas 43 are open at ends thereof (i.e., the hollow areas 43 are open at each of the four corners of the window unit, and are at atmospheric pressure). Hollow areas 43 may be air passages/channels in certain example instances, which may or may not be open at ends thereof. The spacer structure 50 is preferably provided around all four sides of the window unit, and may be provided in four corresponding strips (one strip for each side of the window) which are mitered at about a forty-five degree angle at each end as explained above in connection with Figs. 4-6. Adhesive strips 45 are provided on the interior and/or exterior sides of spacer portions 41 and 41' for attaching the spacer portions 41 and 41' to the VIG unit 1 and may be provided for attaching to respective stops (34 or 35) of the window frame. The VIG unit 1 fits in a channel 56 defined between the portions 41 and 41' as shown in Fig. 7. For example, Fig. 7 shows the VIG window unit 1 mounted in a channel between the opposing portions 41 and 4 1' of the spacer structure. The VIG window unit 1 and the spacer structure 50 (including 41, 41', and optionally 42), are provided in a window frame, such as the window frame shown in Fig. 3, instead of IG window unit 30. Thus, the VIG 1 and the spacer structure 50 may be used to replace an IG window unit 30 in the frame of Fig. 3, or alternatively the VIG 1 and spacer structure 50 may be originally provided in a window frame such as the example frame shown in Fig. 3 instead of an IG window unit 30. In particular, the VIG window unit 1 and the spacer structure 50 are provided in the window frame of Fig. 3 on the sash portion 32 and between the stops 34 and 35 (similar to the Fig. 4-6 embodiment). In Fig. 3 the IG window unit 30 is replaced with the VIG window unit 1 and spacer structure 50, with the exterior sidewalls of the spacer portions 41 and 41' contacting or being adhered to (directly or indirectly) the interior surfaces of stops 34 and 35 respectively and the interior sidewalls of the spacer portions 41 and 41' contacting or being adhered to the VIG window unit 1. Because the VIG window unit 1 is much thinner than the IG window unit 30, the thickness of the spacer structure 50 shown in Figs. 7-8 allows the VIG window unit 1 to be installed in a window frame (e.g., the frame of Fig. 3) that was designed to accommodate at least a thicker IG window unit(s) 30.

The hollow spacer portions 41 and 41' may be substantially rectangle shaped as shown in Fig. 7. Alternatively, the spacer portions 41 and 41' may be substantially L-shaped so that one side of each extends under the VIG unit 1 and is located between the VIG unit and the sash portion 32. When setting member 42 is present, and the hollow spacer portions 41 and 41' are substantially L-shaped, then one side of each of the L-shaped spacer portions 41 and 41' extends under the VIG unit 1 and is located between the VIG unit 1 and the setting member 42. Setting member 42 may be substantially planar in shape in certain example embodiments of this invention. Also, when the hollow spacer portions 41 and 41' are substantially L-shaped, the hollow area 43 of each 41 and 41' extends along the sides of the VIG unit 1 as shown in Fig. 7, but may or may not also extend under the VIG unit 1 (i.e., the hollow area may be provided in only one, or both, sides of the L of a substantially L-shaped spacer portion 41, 41').

Referring to Figs. 7-8, both of the spacer portions 41, 41' include two corners 41b that face and are in contact with one of the glass substrates (2 or 3) of the VIG window unit 1. Adhesive 45 is located between these corners 41b of a given spacer portion. In certain example embodiments, one or both of the corners 41b of each spacer portion may include a softer material 41e and a harder material 41f (the bulk of the spacer portion is made of 41f), with the softer material 41e of the corner portion 41b for contacting the VIG window unit 1 (e.g., see Figs. 7-8). The spacer portions 41 and 41' may be coextruded with the two different materials 41e and 41f, so that the softer polymer based material 41e is attached to the harder polymer based material 41f in the extrusion process. The use of the softer material 41e of the spacer portions to contact the VIG window unit provides for an improved seal against the glass of the VIG unit 1.

Accordingly, referring to Figs. 3-6 for example, in certain embodiments of this invention there is provided a window unit comprising: a VIG window unit in a window frame, the window frame capable of supporting a non-vacuum IG window unit having a larger thickness than does the VIG window unit, said VIG window unit comprising first and second glass substrates with a low pressure gap provided therebetween, the low pressure gap being at pressure less than atmospheric pressure; the VIG window unit being directly supported on a first major side by a first stop portion of said frame and being indirectly supported on a second major side by a second stop portion of said frame, so that a spacer is provided on the second major side of the VIG window unit between the VIG window unit and the second stop portion, but no similar spacer is provided on the first major side of the VIG window unit. For example, referring to Figs. 3-5, there is provided a window unit comprising: a VIG window unit 1 in a window frame, the window frame capable of supporting a non-vacuum IG window unit 30 having a larger thickness than does the VIG window unit 1, said VIG window unit 1 comprising first and second glass substrates 2, 3 with a low pressure gap 6 provided therebetween, the low pressure gap 6 being at pressure less than atmospheric pressure; the VIG window unit 1 being directly supported on a first major side by a first stop portion 35 of said frame and being indirectly supported on a second major side by a second stop portion 34 of said frame, so that a spacer 41 is provided on the second major side of the VIG window unit 1 between the VIG window unit 1 and the second stop portion 34, but no similar spacer 41 is provided on the first major side of the VIG window unit 1 between the VIG unit 1 and the first stop portion 35.

In the window unit of the immediately preceding paragraph, the spacer 41 may comprise a hollow area 43 surrounded by a solid portion 44 when viewed cross sectionally (e.g., see Figs. 4-6). The hollow area 43 may be substantially filled with air, foam and/or other insulating material.

In the window unit of any of the preceding two paragraphs, no spacer need be provided on the first major side of the VIG window unit 1 between the VIG window unit 1 and the first stop. Optionally, an adhesive 45 may be provided on the first major side of the VIG window unit between the VIG window unit and the first stop.

In the window unit of any of the preceding three paragraphs, the VIG window unit may have four peripheral sides, and wherein the spacer 41 may be provided substantially along all four peripheral sides of the VIG window unit. The spacer 41 may be made up of four strip pieces which are respectively provided substantially along the four peripheral sides of the VIG window unit 1.

In the window unit of any of the preceding four paragraphs, adhesive 45 may be provided on the first major side of the VIG window unit so as to be located between the VIG window unit 1 and the first stop portion (34 or 35).

In the window unit of any of the preceding five paragraphs, the first and second stop portions (34 and 35) may extend in direction(s) substantially parallel to each other.

In the window unit of any of the preceding six paragraphs, at least one of the first and second stop portions (34, 35) may include a hollow space 31 surrounded, as viewed cross sectionally, by a solid portion 33, the hollow space 31 of the stop portion(s) possibly being filled or substantially filled with air and/or foam.

In the window unit of any of the preceding seven paragraphs, the spacer 41 may have an approximate rectangular shape when viewed cross sectionally (e.g., see Figs. 4-6).

In the window unit of any of the preceding eight paragraphs, first and second corners 41b of the spacer 41 directly contact the VIG window unit 1. A portion the spacer 41 (e.g., see spacer portion at the recess in which adhesive 45 is located), located between the first and second corners 41b of the spacer and facing the VIG window unit 1, does not directly contact the VIG window unit 1 because adhesive 45 is provided therebetween). At least one of the first and second corners 41b of the spacer 4 may comprise first 41e and second 41f polymer based materials, the first polymer based material 41e being softer than the second 41f polymer based material, and the first polymer based material 41e, but not the second polymer based material 41f, directly contacting the VIG window unit 1 at said corner(s) 41b of the spacer 41 (e.g., see Figs. 4-6, with the hard and soft materials being best shown in Fig. 5).

In the window unit of any of the preceding nine paragraphs, the VIG window unit may comprise a plurality of spacers 5 located in the low pressure gap 6 between the first and second glass substrates (2, 3), and an edge seal 4 provided between (directly or indirectly) the first and second glass substrates (2, 3) for hermetically sealing a periphery of the VIG unit 1 to substantially maintain the low pressure gap 6 at pressure less than atmospheric pressure.

The window unit of any of the preceding ten paragraphs may further include a setting member 42 located (i) between the VIG window unit 1 and a sash portion 32 of the window unit, and (ii) between the spacer 41 and a sash portion 32 of the window unit. The setting member 42 (e.g., a setting block) may be located at a bottom portion of the window unit as shown in Figs. 4 and 6, under the VIG window unit 1 and under the spacer 41.

In the window unit of any of the preceding eleven paragraphs, the VIG window unit 1 may have a thickness of from about 4-12 mm, and a gap between the first and second stop portions (between 35 and 34, or vice versa) may be from about 19-40 mm.

Certain example embodiments of this invention may or may not be used in connection with a re-profiled replacement window stop(s), e.g., for a window unit that takes up the difference in thickness between a multi pane non-vacuum insulated glass window unit and a VIG window unit with little modification to existing window designs, including the window sash. For example, this invention may or may not be used in connection with re-profiled replacement window stop(s) as described in Serial No. 13/541,840, filed July 5, 2012.

According to claim 9 of this invention (e.g., see Figs. 7-8), there is provided a window unit comprising: a VIG window unit 1 in a window frame, the window frame capable of supporting a non-vacuum IG window unit 30 having a larger thickness than does the VIG window unit 1, said VIG window unit 1 comprising first and second glass substrates (2, 3) with a low pressure gap 6 provided therebetween, the low pressure gap 6 being at pressure less than atmospheric pressure; the VIG window unit 1 being located between a first stop portion (34 or 35) of said frame and a second stop portion (the other of 34, 35) of said frame, and wherein a first spacer (41 or 41') is provided between the VIG window unit 1 and the first stop portion, and a second spacer (the other of 41, 41') is provided between the VIG window unit 1 and the second stop portion.

In the window unit of the immediately preceding paragraph, one or both of the first and second spacers (41 and/or 41') may comprises a hollow area 43 surrounded by a solid portion 44 when viewed cross sectionally. The hollow area(s) 43 may be filled with air, foam and/or insulating material.

In the window unit of any of the preceding two paragraphs, the VIG window unit 1 may have four peripheral sides, and wherein the first and second spacers (41, 41') are each provided substantially along all four peripheral sides of the VIG window unit.

In the window unit of any of the preceding three paragraphs, each of the first and second spacers may comprise four strip pieces which are respectively provided substantially along the four peripheral sides of the VIG window unit.

In the window unit of any of the preceding four paragraphs, adhesive 45 is provided between the VIG window unit 1 and each of the first and second spacers.

In the window unit of any of the preceding five paragraphs, each of the first and second spacers may have an approximate rectangular shape when viewed cross sectionally (e.g., see Fig. 7).

In the window unit of any of the preceding six paragraphs, corners 41b of each of the first and second spacers (41, 41') directly contact the VIG window unit 1. The least one of the corners that directly contacts the VIG window unit may comprise first 41e and second 41 f polymer based materials, the first polymer based material 41e being softer than the second polymer based material 41f, and the first polymer based material 41e, but not the second polymer based material 41f, directly contacting the VIG window unit 1 at the corner(s) of the spacer(s).

In the window unit of any of the preceding seven paragraphs, the VIG window unit 1 may comprise a plurality of spacers 5 located in the low pressure gap 6 between the first and second glass substrates 2, 3, and an edge seal 4 provided between the first and second glass substrates 2, 3 for hermetically sealing a periphery of the VIG unit 1 to substantially maintain the low pressure gap 6 at pressure less than atmospheric pressure.

The window unit of any of the preceding eight paragraphs may further include a setting member 42 located at a bottom portion of the window unit over at least a portion of a sash portion 32, the setting member 42 being located under the VIG window unit 1 and under the first and second spacers 41, 41'.

In the window unit of any of the preceding nine paragraphs, the VIG window unit may have a thickness of from about 4-12 mm, and a gap between the first and second stop portions may be from about 19-40 mm.

While certain example embodiments have been described and disclosed herein, it will be understood that the embodiments described herein are intended to be illustrative, not limiting, and that those skilled in the art will understand that various modifications may be made without departing from the scope of the claims appended hereto.

## Claims

1. A window unit comprising:
a IG window unit (1) in a window frame, the window frame capable of supporting a non-vacuum IG window unit having a larger thickness than does a VIG window unit (1),
said IG window unit (1) comprising first and second glass substrates (2, 3);
the IG window unit (1) being directly supported on a first major side by a first stop portion (35) of said frame and being indirectly supported on a second major side by a second stop portion (34) of said frame, so that
a spacer (40; 50) is provided on the second major side of the IG window unit (1) between the IG window unit (1) and the second stop portion (34), but no similar spacer (40; 50) is provided on the first major side of the IG window unit (1), **characterised in that** the IG window unit is a VIG window unit with a low pressure gap (6, 38) provided between first and second glass substrates (2, 3), the low pressure gap (6, 38) being at pressure less than atmospheric pressure, wherein
first and second corners (41b) of the spacer directly contact the VIG window unit, and wherein
a portion of the spacer (40; 50) located between the first and second corners of the spacer and facing the VIG window unit, does not directly contact the VIG window unit and wherein an adhesive (45) is located between the first and second corners.

2. The window unit of claim 1, wherein the spacer (40; 50) comprises a hollow area (43) surrounded by a solid portion when viewed cross sectionally.

3. The window unit of claim 2, wherein the hollow area (43) is substantially filled with air, foam, and/or insulating material.

4. The window unit of any preceding claim, wherein no spacer is provided on the first major side of the VIG window unit (1) between the VIG window unit (1) and the first stop (35), and wherein an adhesive may optionally be provided on the first major side of the VIG window (1) unit between the VIG window unit (1) and the first stop (35).

5. The window unit of any preceding claim, wherein the VIG window unit (1) has four peripheral sides, and wherein the spacer (40; 50) is provided substantially along all four peripheral sides of the VIG window unit (1).

6. The window unit of claim 5, wherein the spacer (40; 50) comprises four strip pieces which are respectively provided substantially along the four peripheral sides of the VIG window unit (1).

7. The window unit of any preceding claim, wherein adhesive (45) is provided on the first major side of the VIG window unit (1) so as to be located between the VIG window unit (1) and the first stop portion (35).

8. The window unit of any preceding claim, wherein the first and second stop portions (35, 34) extend in direction(s) substantially parallel to each other.

9. A window unit comprising:
a IG window unit (1) in a window frame, the window frame capable of supporting a non-vacuum IG window unit having a larger thickness than does a VIG window unit,
said IG window unit (1) comprising first and second glass substrates (2, 3);
the IG window unit (1) being located between a first stop portion (35) of said frame and a second stop portion (24) of said frame, and
wherein a first spacer (41) is provided between the IG window unit (1) and the first stop portion (35), and a second spacer (41') is provided between the IG window unit (1) and the second stop portion (34), **characterised in that** the IG window unit is a VIG window unit with a low pressure gap (6, 38) provided between first and second glass substrates (2, 3), the low pressure gap (6, 38) being at pressure less than atmospheric pressure,
wherein first and second corners (41b) of each of the first and second spacers (41, 41') directly contact the VIG window unit, and wherein
a portion of the spacers (40; 50) located between first and second corners (41b) of the spacers and facing the VIG window unit, does not directly contact the VIG window unit and wherein an adhesive (45) is located between the first and second corners.

10. The window unit of claim 9, wherein at least one of the first and second spacers (41, 41') comprises a hollow area (43) surrounded by a solid portion (44) when viewed cross sectionally.

11. The window unit of claim 10, wherein each of the first and second spacers (41, 41') comprises a hollow area (43) surrounded by a solid portion (44) when viewed cross sectionally, and wherein the hollow areas (43) are each substantially filled with air and/or foam.

12. The window unit of any of claims 9-11, wherein the VIG window unit (1) has four peripheral sides, and wherein the first and second spacers (41, 41') are each provided substantially along all four peripheral sides of the VIG window unit.

13. The window unit of claim 12, wherein each of the first and second spacers (41, 41') comprises four strip pieces which are respectively provided substantially along the four peripheral sides of the VIG window unit (1).

14. The window unit of any of claims 9-13, wherein adhesive (45) is provided between the VIG window unit (1) and each of the first and second spacers (41, 41').

15. A method of installing a vacuum insulated glass (VIG) window unit (1) in a window frame, the method comprising:
removing an IG window unit from the window frame, the IG window unit having a thickness of from about 19-40 mm;
seating a VIG window unit (1), having a thickness of from about 4-12 mm, in the window frame, the VIG window unit (1) comprising first and second glass substrates (2, 3) with a low pressure gap (6, 38) provided therebetween, the low pressure gap (6, 38) being at pressure less than atmospheric pressure,
wherein the VIG window unit (1) is located between a first stop portion (35) of the frame and a second stop portion (34) of the frame; and
wherein a spacer structure (40; 50) is provided between the VIG window unit (1) and at least one of the first and second stop portions (35, 34) of the window frame, wherein first and second corners (41b) of the spacer directly contact the VIG window unit, wherein
a portion of the spacer (40; 50) located between the first and second corners of the spacer and facing the VIG window unit, does not directly contact the VIG window unit, and wherein
an adhesive (45) is located between the first and second corners.

## Patentansprüche

1. Fenstereinheit, umfassend:
eine IG-Fenstereinheit (1) in einem Fensterrahmen, wobei der Fensterrahmen in der Lage ist, eine Nicht-Vakuum-IG-Fenstereinheit mit einer größeren Dicke als eine VIG-Fenstereinheit (1) zu tragen, wobei die IG-Fenstereinheit (1) ein erstes und ein zweites Glassubstrat (2, 3) umfasst;
wobei die IG-Fenstereinheit (1) direkt an einer ersten Hauptseite durch einen ersten Anschlagabschnitt (35) des Rahmens getragen wird und indirekt an einer zweiten Hauptseite durch einen zweiten Anschlagabschnitt (34) des Rahmens getragen wird, so dass ein Abstandshalter (40; 50) an der zweiten Hauptseite der IG-Fenstereinheit (1) zwischen der IG-Fenstereinheit (1) und dem zweiten Anschlagabschnitt (34) vorgesehen ist, wobei jedoch kein ähnlicher Abstandshalter (40; 50) an der ersten Hauptseite der IG-Fenstereinheit (1) vorgesehen ist,
**dadurch gekennzeichnet, dass** die IG-Fenstereinheit eine VIG-Fenstereinheit mit einem Niederdruckspalt (6, 38) ist, der zwischen einem ersten und einem zweiten Glassubstrat (2, 3) vorgesehen ist, wobei der Niederdruckspalt (6, 38) unter einem Druck steht, der geringer als der Atmosphärendruck ist, wobei
die ersten und zweiten Ecken (41b) des Abstandshalters die VIG-Fenstereinheit direkt berühren, und wobei
wobei ein Abschnitt des Abstandshalters (40; 50), der sich zwischen der ersten und der zweiten Ecke des Abstandshalters befindet und der VIG-Fenstereinheit zugewandt ist, die VIG-Fenstereinheit nicht direkt berührt und wobei sich ein Klebstoff (45) zwischen der ersten und der zweiten Ecke befindet.

2. Fenstereinheit nach Anspruch 1, wobei der Abstandshalter (40; 50) einen Hohlraum (43) umfasst, der im Querschnitt gesehen von einem massiven Abschnitt umgeben ist.

3. Fenstereinheit nach Anspruch 2, wobei der Hohlraum (43) im Wesentlichen mit Luft, Schaumstoff und/oder Isoliermaterial gefüllt ist.

4. Fenstereinheit nach einem der vorhergehenden Ansprüche, wobei kein Abstandshalter an der ersten Hauptseite der VIG-Fenstereinheit (1) zwischen der VIG-Fenstereinheit (1) und dem ersten Anschlag (35) vorgesehen ist, und wobei ein Klebstoff wahlweise an der ersten Hauptseite der VIG-Fenstereinheit (1) zwischen der VIG-Fenstereinheit (1) und dem ersten Anschlag (35) vorgesehen werden kann.

5. Fenstereinheit nach einem der vorhergehenden Ansprüche, wobei die VIG-Fenstereinheit (1) vier Umfangsseiten aufweist und wobei der Abstandshalter (40; 50) im Wesentlichen entlang aller vier Umfangsseiten der VIG-Fenstereinheit (1) vorgesehen ist.

6. Fenstereinheit nach Anspruch 5, wobei der Abstandshalter (40; 50) vier Streifenstücke umfasst, die jeweils im Wesentlichen entlang der vier Umfangsseiten der VIG-Fenstereinheit (1) vorgesehen sind.

7. Fenstereinheit nach einem der vorhergehenden Ansprüche, wobei Klebstoff (45) auf der ersten Hauptseite der VIG-Fenstereinheit (1) so vorgesehen ist, dass er sich zwischen der VIG-Fenstereinheit (1) und dem ersten Anschlagabschnitt (35) befindet.

8. Fenstereinheit nach einem der vorhergehenden Ansprüche, wobei sich der erste und der zweite Anschlagabschnitt (35, 34) in im Wesentlichen paralleler Richtung(en) zueinander erstrecken.

9. Fenstereinheit umfassend:
eine IG-Fenstereinheit (1) in einem Fensterrahmen, wobei der Fensterrahmen in der Lage ist, eine Nicht-Vakuum-IG-Fenstereinheit mit einer größeren Dicke als eine VIG-Fenstereinheit zu tragen,
wobei die IG-Fenstereinheit (1) ein erstes und ein zweites Glassubstrat (2, 3) umfasst;
wobei die IG-Fenstereinheit (1) zwischen einem ersten Anschlagabschnitt (35) des Rahmens und einem zweiten Anschlagabschnitt (24) des Rahmens angeordnet ist, und
wobei ein erster Abstandshalter (41) zwischen der IG-Fenstereinheit (1) und dem ersten Anschlagabschnitt (35), und ein zweiter Abstandshalter (41') zwischen der IG-Fenstereinheit (1) und dem zweiten Anschlagabschnitt (34) vorgesehen ist, **dadurch gekennzeichnet, dass** die IG-Fenstereinheit eine VIG-Fenstereinheit mit einem Niederdruckspalt (6, 38) ist, der zwischen einem ersten und einem zweiten Glassubstrat (2, 3) vorgesehen ist, wobei der Niederdruckspalt (6, 38) einen Druck aufweist, der geringer ist als der atmosphärische Druck,
wobei die ersten und zweiten Ecken (41b) jedes der ersten und zweiten Abstandshalter (41, 41') die VIG-Fenstereinheit direkt berühren, und
wobei ein Teil der Abstandshalter (40; 50), der sich zwischen einer ersten und einer zweiten Ecke (41b) der Abstandshalter befindet und der VIG-Fenstereinheit zugewandt ist, die VIG-Fenstereinheit nicht direkt berührt und wobei sich ein Klebstoff (45) zwischen der ersten und der zweiten Ecke befindet.

10. Fenstereinheit nach Anspruch 9, wobei mindestens einer der ersten und zweiten Abstandshalter (41, 41') einen Hohlraum (43) umfasst, der im Querschnitt gesehen von einem massiven Abschnitt (44) umgeben ist.

11. Fenstereinheit nach Anspruch 10, wobei der erste und der zweite Abstandshalter (41, 41') jeweils einen Hohlraum (43) umfassen, der im Querschnitt gesehen von einem massiven Abschnitt (44) umgeben ist, und wobei die Hohlräume (43) jeweils im Wesentlichen mit Luft und/oder Schaumstoff gefüllt sind.

12. Fenstereinheit nach einem der Ansprüche 9 bis 11, wobei die VIG-Fenstereinheit (1) vier Umfangsseiten aufweist und wobei die ersten und zweiten Abstandshalter (41, 41') jeweils im Wesentlichen entlang aller vier Umfangsseiten der VIG-Fenstereinheit vorgesehen sind.

13. Fenstereinheit nach Anspruch 12, wobei jeder der ersten und zweiten Abstandshalter (41, 41') vier Streifenstücke umfasst, die jeweils im Wesentlichen entlang der vier Umfangsseiten der VIG-Fenstereinheit (1) vorgesehen sind.

14. Fenstereinheit nach einem der Ansprüche 9 bis 13, wobei zwischen der VIG-Fenstereinheit (1) und jedem der ersten und zweiten Abstandshalter (41, 41') Klebstoff (45) vorgesehen ist.

15. Verfahren zum Einbauen einer Vakuum-Isolierglas-(VIG)-Fenstereinheit (1) in einen Fensterrahmen, wobei das Verfahren Folgendes umfasst:
Entfernen einer IG-Fenstereinheit aus dem Fensterrahmen, wobei die IG-Fenstereinheit eine Dicke von etwa 19-40 mm aufweist;
Einsetzen einer VIG-Fenstereinheit (1), die eine Dicke von etwa 4-12 mm aufweist, in den Fensterrahmen, wobei die VIG-Fenstereinheit (1) ein erstes und ein zweites Glassubstrat (2, 3) mit einem dazwischen vorgesehenen Niederdruckspalt (6, 38) umfasst, wobei der Niederdruckspalt (6, 38) unter einem Druck steht, der geringer ist als der Atmosphärendruck,
wobei die VIG-Fenstereinheit (1) zwischen einem ersten Anschlagabschnitt (35) des Rahmens und einem zweiten Anschlagabschnitt (34) des Rahmens angeordnet ist; und
wobei eine Abstandshalterstruktur (40; 50) zwischen der VIG-Fenstereinheit (1) und mindestens einem der ersten und zweiten Anschlagabschnitte (35, 34) des Fensterrahmens vorgesehen ist, wobei erste und zweite Ecken (41b) des Abstandshalters die VIG-Fenstereinheit direkt berühren, wobei
wobei ein Teil des Abstandshalters (40; 50), der sich zwischen der ersten und der zweiten Ecke des Abstandshalters befindet und der VIG-Fenstereinheit zugewandt ist, die VIG-Fenstereinheit nicht direkt berührt, und wobei
sich ein Klebstoff (45) zwischen der ersten und der zweiten Ecke befindet.

## Revendications

1. Bloc-fenêtre comprenant :
un bloc-fenêtre IG (1) dans un dormant de fenêtre, le dormant de fenêtre pouvant soutenir un bloc-fenêtre IG non sous vide ayant une épaisseur plus grande qu'un bloc-fenêtre VIG (1), ledit bloc-fenêtre IG (1) comprenant des premier et second substrats en verre (2, 3) ;
le bloc-fenêtre IG (1) étant directement soutenu sur un premier côté principal par une première partie de butée (35) dudit dormant et étant indirectement soutenu sur un second côté principal par une seconde partie de butée (34) dudit dormant, de sorte qu'un espaceur (40 ; 50) soit disposé sur le second côté principal du bloc-fenêtre IG (1) entre le bloc-fenêtre IG (1) et la seconde partie de butée (34), tandis qu'aucun espaceur similaire (40 ; 50) n'est disposé sur le premier côté principal du bloc-fenêtre IG (1),
**caractérisé en ce que** le bloc-fenêtre IG est un bloc-fenêtre VIG comportant un intervalle de basse pression (6, 38) disposé entre les premier et second substrats en verre (2, 3), l'intervalle de basse pression (6, 38) étant à une pression inférieure à la pression atmosphérique,
les premier et second coins (41b) de l'espaceur entrent en contact direct avec le bloc-fenêtre VIG et
une partie de l'espaceur (40 ; 50) situé entre les premier et second coins de l'espaceur et faisant face au bloc-fenêtre VIG n'entre pas en contact direct avec le bloc-fenêtre VIG et un adhésif (45) se trouve entre les premier et second coins.

2. Bloc-fenêtre selon la revendication 1, dans lequel l'espaceur (40 ; 50) comprend une zone creuse (43) entourée d'une partie pleine vu en coupe transversale.

3. Bloc-fenêtre selon la revendication 2, dans lequel la zone creuse (43) est sensiblement remplie d'air, de mousse et/ou de matériau isolant.

4. Bloc-fenêtre selon l'une quelconque des revendications précédentes, dans lequel aucun espaceur n'est disposé sur le premier côté principal du bloc-fenêtre VIG (1) entre le bloc-fenêtre VIG (1) et la première butée (35), et dans lequel un adhésif peut éventuellement être disposé sur le premier côté principal du bloc-fenêtre VIG (1) entre le bloc-fenêtre VIG (1) et la première partie de butée (35).

5. Bloc-fenêtre selon l'une quelconque des revendications précédentes, le bloc-fenêtre VIG (1) possédant quatre côtés périphériques et dans lequel l'espaceur (40 ; 50) est disposé sensiblement le long des quatre côtés périphériques du bloc-fenêtre VIG (1).

6. Bloc-fenêtre selon la revendication 5, dans lequel l'espaceur (40 ; 50) comprend quatre morceaux de bande qui sont respectivement disposés sensiblement le long des quatre côtés périphériques du bloc-fenêtre VIG (1).

7. Bloc-fenêtre selon l'une quelconque des revendications précédentes, dans lequel de l'adhésif (45) est disposé sur le premier côté principal du bloc-fenêtre VIG (1) de manière à être situé entre le bloc-fenêtre VIG (1) et la première partie de butée (35).

8. Bloc-fenêtre selon l'une quelconque des revendications précédentes, dans lequel les première et seconde parties de butée (35, 34) s'étendent dans des directions sensiblement parallèles l'une à l'autre.

9. Bloc-fenêtre comprenant :
un bloc-fenêtre IG (1) dans un dormant de fenêtre, le dormant de fenêtre pouvant soutenir un bloc-fenêtre IG non sous vide ayant une épaisseur plus grande qu'un bloc-fenêtre VIG,
ledit bloc-fenêtre IG (1) comprenant des premier et second substrats en verre (2, 3) ;
le bloc-fenêtre IG (1) étant situé entre une première partie de butée (35) dudit dormant et une seconde partie de butée (24) dudit dormant et
un premier espaceur (41) est disposé entre le bloc-fenêtre IG (1) et la première partie de butée (35), tandis qu'un second espaceur (41') est disposé entre le bloc-fenêtre IG (1) et la seconde partie de butée (34), **caractérisé en ce que** le bloc-fenêtre IG est un bloc-fenêtre VIG comportant un intervalle de basse pression (6, 38) disposé entre les premier et second substrats en verre (2, 3), l'intervalle de basse pression (6, 38) étant à une pression inférieure à la pression atmosphérique,
les premier et second coins (41b) de chacun des premier et second espaceurs (41, 41') entrant en contact direct avec le bloc-fenêtre VIG et
une partie des espaceurs (40 ; 50) situés entre les premier et second coins (41b) des espaceurs et faisant face au bloc-fenêtre VIG n'entrant pas en contact direct avec le bloc-fenêtre VIG et un adhésif-(45) se trouvant entre les premier et second coins.

10. Bloc-fenêtre selon la revendication 9, dans lequel au moins l'un des premier et second espaceurs (41, 41') comprend une zone creuse (43) entourée d'une partie pleine (44) vue en coupe transversale.

11. Bloc-fenêtre selon la revendication 10, dans lequel chacun des premier et second espaceurs (41, 41') comprend une zone creuse (43) entourée d'une partie pleine (44) vue en coupe transversale et dans lequel les zones creuses (43) sont chacune sensiblement remplies d'air et/ou de mousse.

12. Bloc-fenêtre selon l'une quelconque des revendications 9 à 11, le bloc-fenêtre VIG (1) possédant quatre côtés périphériques et dans lequel les premier et second espaceurs (41, 41') sont chacun disposés sensiblement le long des quatre côtés périphériques du bloc-fenêtre VIG.

13. Bloc-fenêtre selon la revendication 12, dans lequel chacun des premier et second espaceurs (41, 41') comprend quatre morceaux de bande qui sont respectivement disposés sensiblement le long des quatre côtés périphériques du bloc-fenêtre VIG (1).

14. Bloc-fenêtre selon l'une quelconque des revendications 9 à 13, dans lequel l'adhésif (45) est disposé entre le bloc-fenêtre VIG (1) et chacun des premier et second espaceurs (41, 41').

15. Procédé d'installation d'un bloc-fenêtre à vitrage isolant sous vide (VIG) (1) dans un dormant de fenêtre, le procédé comprenant :
la dépose d'un bloc-fenêtre IG du dormant de fenêtre, le bloc-fenêtre IG ayant une épaisseur d'environ 19 à 40 mm ;
la pose d'un bloc-fenêtre VIG (1), ayant une épaisseur d'environ 4 à 12 mm, dans le dormant de fenêtre, le bloc-fenêtre VIG (1) comprenant des premier et second substrats en verre (2, 3) entre lesquels se trouve un intervalle de basse pression (6, 38), l'intervalle de basse pression (6, 38) étant à une pression inférieure à la pression atmosphérique,
le bloc-fenêtre VIG (1) étant situé entre une première partie de butée (35) du dormant et une seconde partie de butée (34) du dormant ; et
une structure d'espaceur (40 ; 50) est disposée entre le bloc-fenêtre VIG (1) et au moins l'une des première et seconde parties de butée (35, 34) du dormant de fenêtre, les premier et second coins (41b) de l'espaceur entrant en contact direct avec le bloc-fenêtre VIG,
une partie de l'espaceur (40 ; 50) situé entre les premier et second coins de l'espaceur et faisant face au bloc-fenêtre VIG n'entrant pas en contact direct avec le bloc-fenêtre VIG et
un adhésif (45) se trouvant entre les premier et second coins.
